# EUROPÄISCHE PATENTSCHRIFT

(11) **EP 2 079 538 B1**
(45) Veröffentlichungstag und Bekanntmachung des Hinweises auf die Patenterteilung: **03.07.2019**
(21) Anmeldenummer: 07819125.1
(22) Anmeldetag: 18.10.2007
(51) Int. Cl.: B01D 3/00, B01D 3/14, B01D 3/38

(54) **ANLAGE ZUM DESTILLIEREN VON TRINKALKOHOL, INSBESONDERE WHISKEY**
INSTALLATION FOR THE DISTILLATION OF DRINKING ALCOHOL, ESPECIALLY WHISKEY
INSTALLATION POUR LA DISTILLATION D'ALCOOL DE BOUCHE, NOTAMMENT DE WHISKY

(30) Priorität: 18.10.2006 DE 102006049175
(43) Veröffentlichungstag der Anmeldung: 22.07.2009
(73) Patentinhaber: GEA Wiegand GmbH, 76275 Ettlingen (DE)
(72) Erfinder: BETHGE, Daniel, 56850 Enkirch (DE); HILDENBRAND, Paul, 76571 Gaggenau (DE)
(74) Vertreter: Weickmann & Weickmann PartmbB
(86) Internationale Anmeldenummer: PCT/EP2007/009060
(87) Internationale Veröffentlichungsnummer: WO 2008/046633

(56) Entgegenhaltungen:
- EP-A- 0 401 631
- WO-A-93/16168
- WO-A-2004/038031
- WO-A-2004/088230
- US-A- 4 309 254

## Beschreibung

Die Erfindung betrifft eine Anlage zum Destillieren von Trinkalkohol, insbesondere Whiskey aus fermentierter Maische.

Herkömmliche Destillieranlagen für Trinkalkohol, insbesondere Whiskey, treiben den Alkohol aus fermentierter, d.h. vergorener und damit Alkohol enthaltender Maische mittels einer Destillationskolonne, auch Maischekolonne genannt, aus. Die vorgewärmte, flüssige Maische wird der Destillationskolonne in einem oberen Bereich zugeführt. Die für die Destillation erforderliche Wärmeenergie wird der Destillationskolonne im Fußbereich zugeführt, beispielsweise durch direktes Einblasen von Frischdampf oder indirekt über einen durch Brüden einer weiteren Stufe der Destillieranlage beheizten Reboiler, d.h. einem Wärmetauscher, durch den die im Fußbereich der Destillationskolonne sich sammelnde Schlempe in einem Zwangsumlauf geführt wird. Üblicherweise wird der Reboiler der Destillationskolonne durch Kopfbrüden einer den Alkoholgehalt des in der Destillationskolonne abgezogenen Rohalkohols erhöhenden Rektifikationskolonne beheizt. Die Rektifikationskolonne wird üblicherweise mit leichtem Überdruck und bei einer höheren Kopftemperatur als die bei Unterdruck geführte Destillationskolonne betrieben, so dass die Wärmeenergie des Kopfbrüdens der Rektifikationskolonne in der Regel für die Beheizung der Destillationskolonne ausreicht. Die Rektifikationskolonne wird hierbei durch Frischdampf beheizt.

Herkömmliche Destillieranlagen für Trinkalkohol benötigen für den Destillationsprozess vergleichsweise viel Fremdenergie. Darüber hinaus muss die Energiebilanz der Destillieranlage sorgfältig abgestimmt werden, wenn sensorische Veränderungen des Trinkalkohols vermieden werden sollen. Zu einer Änderung des Geschmacks des Trinkalkohols kann es beispielsweise bei einer lokalen Überhitzung des Alkohol-Produktstroms kommen. So enthält der Kopf der Destillationskolonne für die Beeinflussung der sensorischen Eigenschaften von Whiskey eine mit dem Alkoholbrüden chemisch reagierende Kupferpackung, deren Reaktionseigenschaften temperatur- oder druckabhängig sich ändern. Abhängig von der Kolonnentemperatur kann es zu Crack-Reaktionen kommen, durch die sich Bestandteile beispielsweise der Schlempe in leicht flüchtige Substanzen verwandeln, die in den Rohalkohol gelangen können.

Aus der US 4,309,254 A ist eine Anlage zum Destillieren von Trinkalkohol bekannt, umfassend eine Destillationskolonne, eine Kondensatoranordnung und eine Rektifikationskolonne, wobei die Kondensatoranordnung einen zur Erzeugung von Wasserdampf vorgesehenen Verdampfer umfasst, wobei der Wasserdampf über einen mechanischen Verdichter der Destillationskolonne zuführbar ist.

Aus Gründen der Vollständigkeit sei ferner auf die WO 2004/088230 A und die EP 0 401 631 A verwiesen.

Es ist Aufgabe der Erfindung, eine Anlage zum Destillieren von Trinkalkohol, insbesondere Whiskey zu schaffen, die energieeffizient arbeitet, ohne die sensorischen Eigenschaften des Trinkalkohols zu beeinflussen.

Die Erfindung geht aus von einer Anlage zum Destillieren von Trinkalkohol, insbesondere Whiskey, aus fermentierter Maische, umfassend:
- wenigstens eine aus der fermentierten Maische Alkoholbrüden abziehende Destillationskolonne,
- eine zumindest einen Teil des Alkoholbrüden kondensierende Kondensatoranordnung und
- eine die Alkoholkonzentration erhöhende Rektifikationskolonne, deren Kopfbrüden eine Reboiler der Destillationskolonne heizt.

Die vorstehende Aufgabe wird erfindungsgemäß dadurch gelöst, dass die Kondensatoranordnung einen die Kondensationswärme zumindest eines Teils des Alkoholbrüdens der Destillationskolonne zur Erzeugung von Wasserdampf nutzenden Verdampfer umfasst und dass der Wasserdampf über einen den Druck oder/und die Temperatur des Wasserdampfs erhöhenden mechanischen Verdichter der Destillationskolonne zu deren Beheizung zuführbar ist. Um den Energiebedarf der Rektifikationskolonne zu senken, hat diese zweckmäßigerweise mehr als 50 Böden, wobei der rektifizierte Trinkalkohol hierbei allerdings nicht über den Kopf der Rektifikationskolonne, sondern in einem darunter liegenden oberen Bereich der Kolonne abgezogen wird, um eine Anreicherung mit leicht siedenden Bestandteilen zu vermeiden.

Bei einer solchen Destillieranlage wird nicht nur der Wärmeinhalt des Kopfbrüdens der Rektifikationskolonne, sondern auch der Wärmeinhalt des aus der Destillationskolonne abgezogenen, den Rohalkohol enthaltenden Kopfbrüden für die Beheizung dieser Destillationskolonne oder bei mehrstufigen Anlagen einer weiteren Destillationskolonne genutzt. Insbesondere kann der verdichtete Wasserdampf auch einer weiteren aus der fermentierten Maische Alkoholbrüden abziehenden Destillationskolonne zu deren Beheizung zugeführt werden. Der mechanische Verdichter erhöht den Energieinhalt bzw. die Kondensationstemperatur des Alkoholbrüdens, der ansonsten für die Beheizung der Destillationskolonne nicht ausreichend genutzt werden kann. Wesentlich ist, dass die hierfür erforderliche Energie nicht in Form von kostenintensiv bereit zu stellendem Frischdampf, sondern in Form elektrischer Energie für den motorischen Antrieb des mechanischen Verdichters einfacher und kostengünstiger bereit gestellt werden kann. Wesentlich ist ferner, dass der mechanische Verdichter den Alkoholbrüden nicht unmittelbar verdichtet, sondern Wasserdampf verdichtet, der mittels des Verdampfers indirekt erzeugt wird. Der Verdichter muss deshalb nicht explosionsgeschützt ausgeführt sein, was die Destillieranlage konstruktiv vereinfacht.

Bei dem Verdampfer kann es sich um einen Zwangsumlaufverdampfer handeln. Bevorzugt wird jedoch ein Fallstromverdampfer, da ein solcher Verdampfer mit einer verhältnismäßig geringen Temperaturdifferenz von zum Beispiel etwa 5° zwischen Heizkreistemperatur und Verdampferausgangstemperatur betrieben werden kann, was den Wirkungsgrad bzw. den spez. Wärmedurchgang erhöht.

Der Verdampfer ist zweckmäßigerweise in einem Zwangsumlaufkreis angeordnet, in welchem eine den Wasserdampf liefernde Flüssigkeit zirkuliert. Bei der Flüssigkeit kann es sich um Schlempe aus dem Fußbereich der Destillationskolonne oder aus der Schlempe erzeugtem Entspannungsbrüden handeln. Nachdem die Schlempe heiß aus dem Fußbereich der Destillationskolonne abgezogen wird, lässt sich der Wasserdampf energieeffizient erzeugen. Um mit Sicherheit zu verhindern, dass durch Denaturierungsreaktionen entstehende Substanzen in den Alkoholbrüden der Destillationskolonne gelangen, wird in einer bevorzugten Variante für die Erzeugung des Wasserdampfs ausschließlich vorgewärmtes Frischwasser genutzt. Der Zirkulationskreis enthält bevorzugt einen den Wasserdampf abtrennenden Abscheider, beispielsweise in Form eines Schwerkraftabscheiders, um Feststoffe der Schlempe oder sonstige Abschlämmsubstanzen aus dem Wasserdampf heraus zu halten. Der Abscheider kann auch zur Erzeugung von Entspannungsbrüden aus Schlempe genutzt werden.

Bei dem Wasserdampf handelt es sich bevorzugt um Niederdruckdampf mit einem Druck von 200 bis etwa 250 mbar. Der Druck des Wasserdampfs liegt damit um etwa 60 bis 80 mbar niedriger als der Kopfdruck in der Destillationskolonne. Der Verdichter erhöht den Druck des Wasserdampfs auf einen Wert größer als den Wert des Kopfdrucks, beispielsweise auf 500 bis 600 mbar. Bei dem Verdichter kann es sich um einen Kompressor handeln. Geeignet sind aber insbesondere auch Schaufelradverdichter, wie zum Beispiel Ventilatoren. Es versteht sich, dass der mechanische Verdichter auch mehrere seriell miteinander verbundene mechanische Verdichterstufen umfassen kann.

Der mechanische Verdichter erhöht nicht nur den Druck des Waserdampfs, sondern auch dessen Temperatur. Um eine Überhitzung des verdichteten Wasserdampfs über die in der Destillationskolonne benötigte Temperatur hinaus zu vermeiden, kann dem Wasserdampf vor der Verdichtung Kühlwasser zugemischt werden. Der verdichtete Wasserdampf wird zweckmäßigerweise direkt in den Fußbereich der Destillationskolonne eingeblasen.

Die Destillieranlage umfasst zweckmäßigerweise lediglich eine einzige Destillationskolonne, die mittels des Reboilers und zusätzlich mittels des verdichteten Waserdampfs des mechanischen Verdichters beheizt ist. Dies hat den Vorteil, dass die gesamte Alkoholmenge bei demselben Druck und einbauten gefördert wird. Insbesondere bei Whiskey lassen sich auf diese Weise gute sensorische Eigenschaften erreichen, insbesondere wenn die Kopftemperatur der Destillationskolonne maximal 85°C beträgt. Günstige Werte der Kopftemperatur liegen zwischen 55 und 70°C, während die Temperatur des verdichteten Waserdampfs bei 70 bis 90°C gehalten wird.

Die Kopftemperatur der Rektifikationskolonne liegt zweckmäßigerweise über 85°C, beispielsweise zwischen 85 bund 110°C bei einem Überdruck zwischen 1 und 3 bar.

Es versteht sich, dass die Kondensationsanordnung eine im Produktstrom des Alkoholbrüdens dem Verdampfer nachfolgenden Wärmetauscher für die Vorwärmung der fermentierten, der Destillationskolonne zuzuführenden Maische umfassen kann, um den Wärmeinhalt der den Verdampfer heizenden Alkoholbrüden der Destillationskolonne weitergehend ausnutzen zu können. Der Alkoholproduktstrom aus der Kondensationsanordnung kann der Destillationskolonne und gegebenenfalls der Rektifikationskolonne als kopfseitiger Rückfluss zugeführt werden.

Im Folgenden wird ein Ausführungsbeispiel der Erfindung anhand einer Zeichnung näher erläutert. Hierbei zeigt:

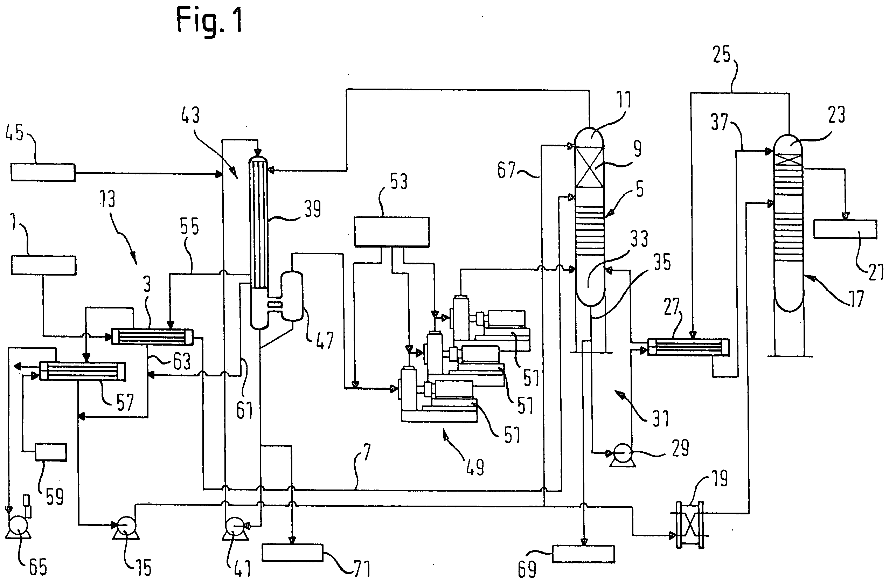

Fig. 1 ein Schema einer gemäß der Erfindung aufgebauten Destillieranlage für Trinkalkohol, insbesondere Whiskey.

Fig. 1 zeigt eine Destillieranlage für Trinkalkohol, insbesondere Whiskey, der aus einer Vorstufe 1 des Alkoholherstellungsprozesses fermentierte, d.h. ethylalkoholhaltige Maische zugeführt wird. Die Maische wird in einem Vorethylalkoholhaltige Maische zugeführt wird. Die Maische wird in einem Vorwärmer 3 auf die Destillationstemperatur einer Destillationskolonne 5 erwärmt und über eine Leitung 7 der Destillationskolonne 5 auf einem mittleren Niveau, jedoch unterhalb katalytisch wirkender Kupfereinbauten 9 der Destillationskolonne 5 zugeführt. Der Kopfbereich der vielfach auch als Maischekolonne bezeichneten Destillationskolonne 5 ist bei 11 angedeutet.

Der aus dem Kopfbereich 11 der Destillationskolonne 5 als Alkoholbrüden abgezogene Rohalkohol wird in einer mehrstufigen Kondensatoranordnung 13 kondensiert und in flüssiger Form von einer Förderpumpe 15 über einen den Rohalkohol auf die Rektifikationstemperatur einer Rektifikationskolonne 17 erwärmenden Vorwärmer 19 der Rektifikationskolonne 17 als Zulauf zugeführt. Die Rektifikationskolonne 17 erhöht den Alkoholgehalt des Rohalkohols der Destillationskolonne 5 auf Werte zwischen etwa 93 bis 96 Vol%. Stufen zum Abtrennen der im Trinkalkohol unerwünschten Fraktionen (Fuselöle) sind vorhanden, jedoch nicht dargestellt. Die Rektifikationskolonne 17 gibt das Trinkalkohol-Endprodukt bei 21 aus einer Kolonnenposition unterhalb ihres Kopfbereichs 23 ab.

Aus dem Kopfbereich 23 der Rektifikationskolonne 17 über eine Leitung 25 abgezogener Kopfbrüden wird einem Reboiler 27 der Destillationskolonne 5 zugeführt, der über einen mit einer Pumpe 29 versehenen Zwangsumlaufkreis 31 im Fußbereich 33 der Destillationskolonne 5 anfallende Schlempe über einen Fußbereichsanschluss 35 abzieht und nach der Erwärmung in dem Reboiler 27 für die Beheizung der Destillationskolonne 5 in deren Fußbereich 33 zurückführt. Der Reboiler 27 bildet zugleich den Kopfkondensator der Rektifikationskolonne 17 und liefert über eine Leitung 37 aus dem Kopfbrüden kondensierten Rückfluss an den Kopfbereich 23 der Rektifikationskolonne 17.

Die Destillationskolonne 5 wird bei einem leichten Unterdruck von etwa 300 bis 500 mbar bei einer Kopfbrüdentemperatur zwischen 55 und 70°C betrieben. Die Rektifikationskolonne 17 arbeitet bei einem leichten Überdruck von maximal 3 bar absolut und einer Kopfbrüdentemperatur zwischen 85 und 110°C. Generell soll bei Maischerohstoffen mit relativ hohem Proteinanteil, wie zum Beispiel Roggen, Weizen, Gerste usw. die Temperatur der Destillationskolonne 85°C nicht überschreiten. Unter den erwähnten Betriebsbedingungen reicht der Energieinhalt des Kopfbrüdens der zweckmäßigerweise über Frischdampf beheizten Rektifikationskolonne 17 nicht aus, um die Destillationskolonne 5 ausschließlich über den Reboiler 27 zu beheizen. Die erste Stufe der Kondensatoranordnung 13 ist deshalb als Fallfilmverdampfer 39 ausgebildet, der in einem mit einer Pumpe 41 versehenen Zwangsumlaufkreis 43 zirkulierendes Frischwasser verdampft. Das Frischwasser wird bei 45 in vorgewärmter Form zugeführt und verlässt den Fallfilmverdampfer 39 über einen Schwerkraftabscheider 47 als Niederdruck-Wasserdampf, der über einen mechanischen Verdichter 49 mit gegenüber dem Niederdruck-Wasserdampf erhöhtem Druck und erhöhter Temperatur direkt in den Fußbereich 33 der Destillationskolonne 5 eingeblasen wird. Der Niederdruck-Wasserdampf hat eingangsseitig des Verdichters 49 einen Druck von etwa 200 bis 250 mbar, der von dem Verdichter 49 auf einen Ausgangsdruck zwischen 500 und 600 mbar bei einer Temperatur zwischen 70 und 90°C angehoben wird.

Im dargestellten Ausführungsbeispiel umfasst der mechanische Verdichter 49 drei den Druck seriell erhöhenden mechanischen Verdichterstufen 51. Im Prinzip genügt jedoch eine einzige Verdichterstufe, soweit sie den Anforderungen an die Druckerhöhung bzw. Temperaturerhöhung genügt. Um eine Überhitzung des verdichteten Wasserdampfs zu vermeiden, wird am Eingang jeder Verdichterstufe 51 aus einer Quelle 53 gegebenenfalls Zusatzwaser injiziert. Bei dem Verdichter 49 bzw. seinen Verdichterstufen 51 kann es sich um Kompressoren handeln. Geeignet sind insbesondere Flügelradkompressoren bzw. Ventilatoren.

Im Prinzip können anstelle des Fallfilmverdampfers 39 auch andere Verdampfertypen eingesetzt werden. Vorteil des Fallfilmverdampfers ist jedoch seine geringe Temperaturdifferenz von beispielsweise 5°C zwischen der Eingangstemperatur des zumindest teilweise zu kondensierenden Kopfbrüdens der Destillationskolonne 5 und der Ausgangstemperatur des Niederdruck-Wasserdampfs. Der Energieinhalt des Kopfbrüdens kann auf diese Weise besser genutzt werden. Die für den Motorantrieb des mechanischen Verdichters 49 erforderliche elektrische Energie kann auf diese Weise verringert werden. Im Prinzip könnte der mechanische Verdichter 49 auch als Dampfstrahlverdichter aufgebaut sein, was aber den Aufwand bei der Bereitstellung von Frischdampf erhöhen würde, während die Bereitstellung elektrischer Energie problemlos ist.

Da der Kopfbrüden der Destillationskolonne 5 in dem Fallfilmverdampfer 39 nicht vollständig kondensiert, wird der nicht kondensierte Brüdenanteil bei 55 dem die zweite Stufe der Kondensationsanordnung 13 bildenden Vorwärmer 3 für die Vorwärmung der Maische zugeführt. Der Ausgangsbrüden des Vorwärmers 3 wird schließlich einem Hauptkondensator 57 zugeführt, der die dritte Stufe der Kondensationsanordnung 13 bildet und den Rohalkohol als flüssiges Kondensat zur Weiterleitung an die Rektifikationskolonne 17 abgibt. Der Hauptkondensator 57 wird durch Kühlwasser gekühlt, das bei 59 zugeführt wird. Das Alkoholkondensat des Hauptkondensators 57 wird mit dem bei 61 abgezogenen Alkoholkondensat des Fallfilmverdampfers 39 und dem bei 63 abgezogenen Alkoholkondensat des Vorwärmers 3 vereinigt.

Der Druck in der Destillieranlage wird über eine an den Hauptkondensator 57 angeschlossene Vakuumpumpe 65 eingestellt. Es bleibt nachzutragen, dass das in der Kondensationsanordnung 13 erzeugte Rohalkohol-Kondensat über eine Leitung 67 als Rückfluss auch der Destillationskolonne 5 zugeführt wird, und zwar bevor es den Vorwärmer 19 durchlaufen hat. Die in der Destillationskolonne 5 anfallende Schlempe wird aus dem Zirkulationskreis 31 des Reboilers 27 abgeführt und bei 69 einer weiteren Verwendung, beispielsweise einem Trocknungsprozess für die Verwendung als Tierfutter oder dergleichen zugeführt. Der Abscheider 47 trennt Flüssigkeitsmitriss und Tropfen aus den Brüden ab, um einen einwandfreien Betrieb der Verdichter 49 zu gewährleisten. Das Abschlämmen bei 71 verhindert Kalkablagerungen und dergleichen im Fallstromverdampfer 39.

Im Ausführungsbeispiel der Fig. 1 wird der den Niederdruck-Wasserdampf erzeugende Fallfilmverdampfer durch vorgewärmtes Frischwasser gespeist. Der Niederdruck-Wasserdampf kann aber auch aus Schlempe-Entspannungsbrüden erzeugt werden, der z. B. in einem im Zwangsumlaufkreis 43 liegenden Entspannungs-Abscheider gewonnen wird. Die anfallende Schlempe wird aus dem Entspannungs-Abscheider abgezogen und kann einer weiteren Verwendung, beispielsweise wiederum einem Trocknungsprozess zugeführt werden. Da für die Erzeugung des Niederdruck-Wasserdampfs die bereits auf die Destillationstemperatur vorgewärmte Schlempe bzw. deren Brüden genutzt wird, wird der Energiebedarf der Destillieranlage weiter gemindert.

## Patentansprüche

1. Anlage zum Destillieren von Trinkalkohol, insbesondere Whiskey aus fermentierter Maische, umfassend
wenigstens eine aus der fermentierten Maische Alkoholbrüden abziehende Destillationskolonne (5),
eine zumindest einen Teil des Alkoholbrüdens kondensierende Kondensatoranordnung (13) und
eine die Alkoholkonzentration erhöhende Rektifikationskolonne (17), deren Kopfbrüden einen Reboiler (27) der Destillationskolonne (5) heizt,
wobei die Kondensatoranordnung (13) einen die Kondensationswärme zumindest eines Teils des Alkoholbrüdens der Destillationskolonne (5) zur Erzeugung von Wasserdampf nutzenden Verdampfer (39) umfasst und dass der Wasserdampf über einen den Druck oder/und die Temperatur des Wasserdampfs erhöhenden, mechanischen Verdichter (49) der Destillationskolonne (5) zu deren Beheizung zuführbar ist, wobei dem Verdampfer (39) für die Erzeugung des Wasserdampfs Frischwasser, insbesondere vorgewärmtes Frischwasser oder Schlempe oder Schlempe-Entspannungsbrüden zuführbar ist, und der mechanische Verdichter (49) über einen den Wasserdampf abtrennenden Abscheider (47) an einen durch den Verdampfer (39) geführten Zirkulationskreis (43) für Frischwasser oder Schlempe oder Schlempe-Entspannungsbrüden angeschlossen ist,
**dadurch gekennzeichnet, dass**
die Rektifikationskolonne (17) mehr als 50 Böden aufweist und der rektifizierte Trinkalkohol in einem unter dem Kopf der Rektifikationskolonne (17) liegenden oberen Bereich abgezogen wird.

2. Anlage nach Anspruch 1, **dadurch gekennzeichnet, dass** der Verdampfer (39) als Fallfilmverdampfer ausgebildet ist.

3. Anlage nach einem der Ansprüche 1 bis 2, **dadurch gekennzeichnet, dass** der mechanische Verdichter (49) mehrere seriell verbundene mechanische Verdichterstufen (51) umfasst.

4. Anlage nach einem der Ansprüche 1 bis 3, **dadurch gekennzeichnet, dass** der von dem mechanischen Verdichter (49) verdichtete Wasserdampf der Destillationskolonne (5) direkt zugeführt ist.

5. Anlage nach einem der Ansprüche 1 bis 4, **dadurch gekennzeichnet, dass** die Destillationskolonne (5) mittels des Reboilers (27) und zusätzlich mittels des verdichteten Wasserdampfs des mechanischen Verdichters (49) beheizt ist, vorzugsweise eine Destillationstemperatur von maximal 85°C.

6. Anlage nach einem der Ansprüche 1 bis 5, **dadurch gekennzeichnet, dass** die Rektifikationsparameter der Rektifikationskolonne (17) höher als 85°C ist und der Alkohol-Produktionsstrom der Rektifikationskolonne (17) über einen Vorwärm-Wärmetauscher (19) zuführbar ist.

7. Anlage nach einem der Ansprüche 1 bis 6, **dadurch gekennzeichnet, dass** die Kondensatoranordnung (13) einen im Produktstrom des Alkoholbrüdens dem Verdampfer (39) nachfolgenden Wärmetauscher (3) für die Vorwärmung der fermentierten, der Destillationskolonne zuzuführenden Maische umfasst.

8. Anlage nach einem der Ansprüche 1 bis 7, **dadurch gekennzeichnet, dass** ein Teil des Alkoholproduktstroms der Kondensationsanordnung (13) der Destillationskolonne (5) als Rückfluss zuführbar ist.

## Claims

1. System for distilling drinking alcohol, in particular whiskey from fermented mash, comprising at least one distillation column (5) which draws off alcohol vapour from the fermented mash, a condenser assembly (13) which condenses at least part of the alcohol vapour, and a rectification column (17) which increases the alcohol concentration and the top vapour of which heats a reboiler (27) of the distillation column (5), the condenser assembly (13) comprising an evaporator (39) which uses the condensation heat of at least part of the alcohol vapour of the distillation column (5) to generate steam, and it being possible to supply the steam, for the purpose of heating said steam, to the distillation column (5) by means of a mechanical compressor (49) that increases the pressure and/or temperature of the steam, it being possible to supply the evaporator (39) with fresh water, in particular preheated fresh water, spent wash or spent wash flash vapour, for generating the steam, and the mechanical compressor (49) being connected, by means of a separator (47) which separates the steam, to a circulating circuit (43) for fresh water, spent wash or spent wash flash vapour that passes through the evaporator (39), **characterised in that** the rectification column (17) has more than 50 trays and the rectified drinking alcohol is drawn off in an upper region below the top of the rectification column (17).

2. System according to claim 1, **characterised in that** the evaporator (39) is designed as a falling film evaporator.

3. System according to either claim 1 or claim 2, **characterised in that** the mechanical compressor (49) comprises a plurality of mechanical compressor stages (51) connected in series.

4. System according to any of claims 1 to 3, **characterised in that** the steam compressed by the mechanical compressor (49) is directly supplied to the distillation column (5).

5. System according to any of claims 1 to 4, **characterised in that** the distillation column (5) is heated by means of the reboiler (27) and additionally by means of the compressed steam from the mechanical compressor (49), preferably to a distillation temperature of 85°C at most.

6. System according to any of claims 1 to 5, **characterised in that** the rectification parameter of the rectification column (17) is higher than 85°C and the alcohol production stream can be supplied to the rectification column (17) via a preheating heat exchanger (19).

7. System according to any of claims 1 to 6, **characterised in that** the condenser assembly (13) comprises a heat exchanger (3) for preheating the fermented mash to be supplied to the distillation column, which heat exchanger is downstream of the evaporator (39) in the product stream of the alcohol vapour.

8. System according to any of claims 1 to 7, **characterised in that** part of the alcohol product stream of the condensation assembly (13) can be supplied to the distillation column (5) as reflux.

## Revendications

1. Installation servant à distiller de l'alcool de bouche, en particulier du whisky à partir de moût fermenté, comprenant
au moins une colonne de distillation (5) distillant les vapeurs d'alcool à partir du moût fermenté,
un ensemble condenseur (13) condensant au moins une partie des vapeurs d'alcool,
une colonne de rectification (17) augmentant la concentration en alcool, colonne dont les vapeurs de tête chauffent un rebouilleur (27) de la colonne de distillation (5),
dans lequel l'ensemble condenseur (13) comprend un évaporateur (39) utilisant la chaleur de condensation d'au moins une partie des vapeurs d'alcool de la colonne de distillation (5) pour produire de la vapeur d'eau et en ce que la vapeur d'eau peut être amenée à la colonne de distillation (5) pour chauffer celle-ci par l'intermédiaire d'un compresseur mécanique (49) augmentant la pression et/ou la température de la vapeur d'eau, dans lequel de l'eau fraîche, en particulier de l'eau fraîche préchauffée ou de la vinasse ou des vapeurs de détente de vinasse peuvent être amenées à l'évaporateur (39) pour la production de vapeur d'eau, et le compresseur mécanique (49) est raccordé à un circuit de circulation (43), traversant l'évaporateur (39), pour l'eau fraîche ou la vinasse ou les vapeurs de détente de vinasse par l'intermédiaire d'un séparateur (47) séparant la vapeur d'eau,
**caractérisée en ce que**
la colonne de rectification (17) présente plus de 50 plateaux et l'alcool de bouche rectifié est distillé dans une zone supérieure située au-dessous de la tête de la colonne de rectification (17).

2. Installation selon la revendication 1, **caractérisée en ce que** l'évaporateur (39) est réalisé sous la forme d'un évaporateur à pellicule tombante.

3. Installation selon l'une quelconque des revendications 1 à 2, **caractérisée en ce que** le compresseur mécanique (49) comprend plusieurs étages de compresseur (51) mécaniques reliés en série.

4. Installation selon l'une quelconque des revendications 1 à 3, **caractérisée en ce que** la vapeur d'eau comprimée par le compresseur mécanique (49) est amenée directement à la colonne de distillation (5).

5. Installation selon l'une quelconque des revendications 1 à 4, **caractérisée en ce que** la colonne de distillation (5) est chauffée au moyen du rebouilleur (27) et en plus au moyen de la vapeur d'eau comprimée du compresseur mécanique (49), de préférence à une température de distillation de 85 °C maximum.

6. Installation selon l'une quelconque des revendications 1 à 5, **caractérisée en ce que** le paramètre de rectification de la colonne de rectification (17) est supérieur à 85 °C et le flux de production d'alcool peut être amené à la colonne de rectification (17) par l'intermédiaire d'un échangeur de chaleur à préchauffage (19).

7. Installation selon l'une quelconque des revendications 1 à 6, **caractérisée en ce que** l'ensemble condenseur (13) comprend un échangeur de chaleur (3) situé en aval de l'évaporateur (39) dans le flux de produit des vapeurs d'alcool pour le préchauffage du moût fermenté à amener à la colonne de distillation.

8. Installation selon l'une quelconque des revendications 1 à 7, **caractérisée en ce qu'**une partie du flux de produit d'alcool de l'ensemble condensateur (13) peut être amenée à la colonne de distillation (5) en tant que reflux.
